# EUROPEAN PATENT APPLICATION

(11) **EP 4 790 946 A1**
(43) Date of publication of application: **12.08.2026**
(21) Application number: 25849541.5
(22) Date of filing: 11.06.2025
(51) Int. Cl.: H04L 9/08, G06F 21/60

(54) **KEY MANAGEMENT METHOD, KEY ENCRYPTION METHOD, DATA ENCRYPTION METHOD, AND RELATED DEVICE**

(30) Priority: 11.12.2024 CN 202411822734
(71) Applicant: Hygon Information Technology Co., Ltd., Binhai New Area, Tianjin 300392 (CN)
(72) Inventor: LI, Pu, Tianjin 300392 (CN); TU, Haibo, Tianjin 300392 (CN)
(74) Representative: Metroconsult Srl
(86) International application number: PCT/CN2025/100459
(87) International publication number: WO 2026/123624

(57) **Abstract**

Embodiments of the present disclosure provide a key management method, a key encryption method, a data encryption method, and related devices. The key management method is applied to a cryptographic module embedded in a processor, including: receiving a key management request used to request the management of a target key, and the key management request includes key management requirement information; the target key is at least used to encrypt an application key which is a critical key for enabling secure data transmission in a virtual private network; generating a target key ciphertext corresponding to the target key using a root key; storing the target key ciphertext and target key authentication information into a dedicated memory, and stored content of the dedicated memory is managed by the cryptographic module, and when being used, the stored content is loaded into a secure memory; and returning index information which is used to index a storage location of the target key ciphertext and the target key authentication information. The technical solutions according to the embodiments of the present disclosure can improve the security of the execution result of the encryption and decryption program.

## Description

### RELATED APPLICATION

The present disclosure claims priority to Chinese Patent Application NO. 202411822734.8, entitled "key management method, key encryption method, data encryption method, and related devices", and filed on December 11, 2024, which is hereby incorporated by reference its entirety.

### TECHNICAL FIELD

Embodiments of the present disclosure relate to the technical field of the computer, and particularly to a key management method, key encryption method, data encryption method, and related devices.

### BACKGROUND

A Virtual Private Network (VPN) is a technology that establishes a private network over a public network, which allows a secure connection between two or more private networks on the public network. For example, Internet Protocol Security (IPsec) VPN is one of VPN technologies that implements remote access using IPsec. An IPsec tunnel is established between two or more private networks on the public network, and the security of a VPN connection is ensured through encryption and authentication algorithms. To achieve the automatic negotiation of the protection parameter and the tunnel for IPSec, it is necessary to utilize the execution result of an encryption and decryption program (e.g., critical keys generated during execution). Therefore, the security of the execution result of the encryption and decryption program is crucial for the reliable implementation of the IPsec.

In this context, how to provide a technical solution to improve the security of the execution result of encryption and decryption program has become a technical problem urgently to be solved by those skilled in the art.

### SUMMARY

In view of the above content, the embodiments of the present disclosure provide a key management method, a key encryption method, a data encryption method, and related devices, so as to improve the security of the execution results of encryption and decryption operations.

In order to achieve the above objective, the embodiments of the present disclosure provide the following technical solutions.

In a first aspect, an embodiment of the present disclosure provides a key management method, which is applied to a cryptographic module embedded in a processor, the method including:
receiving a key management request used to request the management of a target key, and the key management request includes key management requirement information; the target key is at least used to encrypt an application key, and the application key is a critical key for enabling secure data transmission in a virtual private network;
generating a target key ciphertext corresponding to the target key using a root key of the cryptographic module;
storing the target key ciphertext together with target key authentication information in the key management requirement information into a dedicated memory where the root key is stored, and stored content of the dedicated memory is managed by the cryptographic module, and when being used, the stored content is loaded by the cryptographic module into a secure memory of the processor; and
returning index information, and the index information is used to index a storage location of the target key ciphertext and the target key authentication information.

In a second aspect, an embodiment of the present disclosure provides a key encryption method, which is applied to a cryptographic module embedded ina processor, the method including:
receiving a key encryption request, and the key encryption request at least includes index information and target key authentication information, and the index information is obtained according to the key management method according to the first aspect;
obtaining a stored target key ciphertext and the target key authentication information from a dedicated memory of the processor according to the index information;
decrypting the stored target key ciphertext with a root key of the cryptographic module to obtain a target key upon successful verification of the received target key authentication information and the stored target key authentication information, and the target key is at least used to encrypt an application key;
encrypting the application key determined by the key encryption request with the target key, to obtain an application key ciphertext and application key integrity verification information; and
returning the application key ciphertext and the application key integrity verification information.

In a third aspect, an embodiment of the present disclosure provides a data encryption method, which is applied to a cryptographic module embedded in a processor, the method including:
receiving a data encryption request, and the data encryption request includes to-be-encrypted data and encryption requirement information;
obtaining a data encryption key according to the encryption requirement information, and the data encryption key at least includes an application key obtained by decrypting an application key ciphertext returned by the key encryption method according to the second aspect;
encrypting the to-be-encrypted data with the data encryption key to obtain an encrypted data ciphertext; and
returning the encrypted data ciphertext.

In a fourth aspect, an embodiment of the present disclosure provides a processor, including an embedded cryptographic module;
the cryptographic module includes:
a key management module configured to receive a key management request used to request the management of a target key, and the key management request includes key management requirement information; the target key is at least used to encrypt an application key, and the application key is a critical key for enabling secure data transmission in a virtual private network;
an algorithm processing module configured to generate a target key ciphertext corresponding to the target key using a root key of the cryptographic module;
the key management module is further configured to store the target key ciphertext together with target key authentication information in the key management requirement information into a dedicated memory where the root key is stored; and return index information, and the index information is used to index a storage location of the target key ciphertext and the target key authentication information; and
stored content of the dedicated memory is managed by the cryptographic module, and when being used, the stored content is loaded by the cryptographic module into a secure memory of the processor.

In a fifth aspect, an embodiment of the present disclosure provides a cryptographic device, including:
the processor according to the fourth aspect.

A key management method according to the embodiments of the present disclosure is applied to a cryptographic module embedded in a processor, the method including: receiving a key management request used to request the management of a target key, and the key management request includes key management requirement information; the target key is at least used to encrypt an application key, and the application key is a critical key for enabling secure data transmission in a virtual private network; generating a target key ciphertext corresponding to the target key using a root key of the cryptographic module; storing the target key ciphertext together with target key authentication information in the key management requirement information into a dedicated memory where the root key is stored, and stored content of the dedicated memory is managed by the cryptographic module, and when being used, the stored content is loaded by the cryptographic module into a secure memory of the processor; and returning index information, which is used to index a storage location of the target key ciphertext and the target key authentication information.

It can be seen that in the technical solutions according to the embodiments of the present disclosure, the target key is encrypted with the root key of the cryptographic module according to the key management request, because the root key of the cryptographic module is a unique root key generated therein, and the root key is stored in the dedicated memory of the processor. The stored content in the dedicated memory is only visible within the cryptographic module and invisible to any other module (i.e., the stored content is managed by the cryptographic module and inaccessible to any other module). Thus, after the target key is encrypted with the root key, the target key ciphertext and the target key authentication information may be further stored in the dedicated memory, thereby ensuring the security of the encryption process of the target key and the security of the target key ciphertext. Meanwhile, the stored content in the dedicated memory is loaded into the secure memory for use when needed, and the target key is at least used to encrypt the application key (which is a critical key for enabling secure data transmission in a virtual private network). Thus, it is possible to effectively ensure the security of the target key ciphertext and the security of the subsequent encryption of the application key using the target key, thereby improving the security of the application key and the security of the execution result of the encryption program.

### BRIEF DESCRIPTION OF THE DRAWINGS

In order to more clearly illustrate the technical solutions in the embodiments of the present disclosure or in the prior art, the drawings to be used in the description of the embodiments or the prior art will be briefly introduced as follows. Obviously, the drawings concerned in the following description only illustrate some embodiments of the present disclosure, and those of ordinary skill in the art can obtain other drawings from the provided drawings without paying any inventive labor.
FIG. 1A illustrates a flowchart of a key management method according to an embodiment of the present disclosure;
FIG. 1B illustrates a flowchart of a key management method according to another embodiment of the present disclosure;
FIG. 2A illustrates a flowchart of a key encryption method according to an embodiment of the present disclosure;
FIG. 2B illustrates a flowchart of a key encryption method according to another embodiment of the present disclosure;
FIG. 3 illustrates a flowchart of a key encryption method according to another embodiment of the present disclosure;
FIG. 4 illustrates a flowchart of a data encryption method according to an embodiment of the present disclosure;
FIG. 5 illustrates a structural diagram of a processor according to an embodiment of the present disclosure;
FIG. 6 illustrates a schematic diagram of an implementation process of a user-space Internet Key Exchange (IKE) program based on a Linux system according to an embodiment of the present disclosure;
FIG. 7 illustrates a schematic diagram of a process of executing a user program by a processor according to an embodiment of the present disclosure;
FIG. 8 illustrates a structural diagram of a cryptographic device according to an embodiment of the present disclosure;
FIG. 9 illustrates a schematic diagram of an implementation process of executing a key management request by a cryptographic device according to an embodiment of the present disclosure;
FIG. 10 illustrates a schematic diagram of an implementation process of executing a key encryption request by a cryptographic device according to an embodiment of the present disclosure;
FIG. 11 illustrates a schematic diagram of an implementation process of executing a data encryption request by a cryptographic device according to an embodiment of the present disclosure; and
FIG. 12 illustrates a schematic diagram of an implementation process of executing a data encryption request by a cryptographic device according to another embodiment of the present disclosure.

### DESCRIPTION OF EMBODIMENTS

The technical solutions in the embodiments of the present disclosure will be clearly and completely described below in conjunction with the drawings for the embodiments of the present disclosure. Obviously, those described are merely parts, rather than all, of the embodiments of the present disclosure. Based on the embodiments of the present disclosure, any other embodiment obtained by those of ordinary skill in the art without paying any inventive labor should fall within the protection scope of the present disclosure.

With the popularization of computer network applications, it has become increasingly important to interconnect internal networks in different regions securely and conveniently to achieve resource sharing, as well as to access the internal networks conveniently and quickly. The VPN technology can meet the above needs. By establishing a private network over a public network, the VPN technology enables secure connections between two or more private networks on the public network.

Internet Protocol Security (IPsec) is one of VPN technologies, and it is a framework architecture composed of two types of protocols: an Authentication Header (AH) protocol and an Encapsulated Security Payload (ESP) protocol. The IPsec aims to provide high-security features for an Internet Protocol (IP), including data encryption, authentication, and data tamper-proof functions. A VPN is a solution generated under the implementation of such security features.

That is, the IPsec is a technical means to implement the VPN, and the VPN is an application mode of the IPsec.

The IPSec is a protocol suite that provides confidentiality, data integrity, identity authentication, and replay attack prevention for network communications. By encrypting and/or verifying data packets at an IP layer, it ensures secure data transmission over an insecure public Internet. The IPsec is widely used in building virtual private networks (VPNs), protecting data transmission between data centers and supporting secure access for remote users. In order to realize the automatic negotiation of IPSec protection parameters and tunnels, the support of an Internet Key Exchange (IKE) protocol is required. The IKE protocol is a signaling protocol of the IPSec, which provides the IPSec with services of automatically negotiating and exchanging keys and establishing a security association, thereby simplifying the use and management of the IPSec, as well as the configuration and maintenance thereof.

Therefore, it is very necessary to ensure the security of the execution result (e.g., critical keys) of an encryption and decryption program such as the IKE. On this basis, an embodiment of the present disclosure provides a key management method to improve the security of the execution result of the encryption and decryption program.

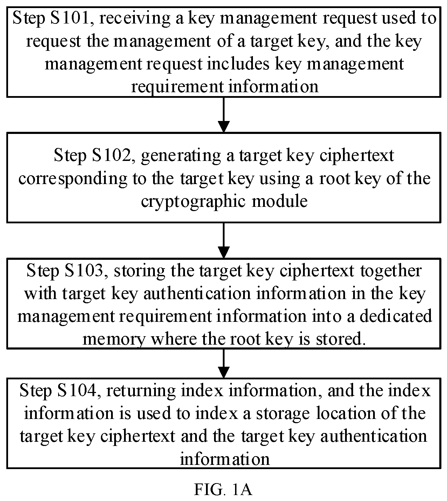

Referring to FIG. 1A, which illustrates a flowchart of a key management method according to an embodiment of the present disclosure. The method is applied to a cryptographic module embedded in a processor.

As illustrated in FIG. 1A, the method includes the following steps.

Step S101: receiving a key management request used to request the management of a target key, and the key management request includes key management requirement information.

The target key is at least used to encrypt an application key, and the application key is a critical key for enabling secure data transmission in a virtual private network.

There are some critical keys with higher security levels during execution of the encryption and decryption program by the cryptographic module, and the target key may be at least used to encrypt these critical keys with higher security levels (application keys), thereby improving the security of the application keys.

For example, when the encryption and decryption program is the IKE program mentioned above, the application key may be an initiator's private key (priv_i) in a step "in both communication parties, an initiator uses his private key to perform asymmetric encryption on a key exchange key, a one-time random number, identity information and an encrypted certificate of a responder" during execution of the IKE program.

In some embodiments, the application key with a higher security level may be a SKEYID_e key during execution of the IKE program, also called an IPsec Encryption Key (IEK) or an IPsec Security Key (ISK), and also called SKEYID_d.

In this embodiment, the ISK is used to derive encryption information for the IPsec. The ISK is generated based on a shared key (a DH value) calculated by a Diffie-Hellman algorithm and a nonce value (a random number), and is employed for subsequent establishment of an IPsec Security Association (SA) and generation of keys.

The IEK is a key used for encrypting subsequent messages of the IKE protocol. The IEK is also calculated using the Diffie-Hellman algorithm and the nonce value, thereby ensuring the security of subsequent messages of the IKE protocol.

Step S102: generating a target key ciphertext corresponding to the target key using a root key of the cryptographic module.

The root key is a unique key generated within the cryptographic module during manufacturing. The generated root key is stored in a dedicated memory which is exclusively managed by the cryptographic module, and the content stored therein is visible within the cryptographic module but invisible to other programs stored in the processor, thereby ensuring high confidentiality.

The dedicated memory may be a Non-Volatile Random Access Memory (NVRAM), which is disposed inside the processor and managed by the cryptographic module.

Step S103: storing the target key ciphertext together with target key authentication information in the key management requirement information into a dedicated memory where the root key is stored.

Stored content of the dedicated memory is managed by the cryptographic module, and when being used, the stored content is loaded by the cryptographic module into a secure memory of the processor.

Since there is physical isolation between the secure memory and an ordinary memory of the processor, loading the stored content into the secure memory ensures the security when the stored content (e.g., the stored target key ciphertext) is used.

In an embodiment, in order to facilitate determining a storage location of the target key ciphertext and the target key authentication information, the key management requirement information may further include target key index information; Step S103 may include:
storing the target key ciphertext together with the target key authentication information in the key management requirement information into a corresponding location of the dedicated memory indicated by the target key index information, so as to use the target key index information as the returned index information.

The target key authentication information (which may be an arbitrary 32-bit unsigned integer) is included in the key management requirement. Since the target key ciphertext is stored in the dedicated memory and the index information is returned in the embodiment of the present disclosure, the target key authentication information may be used to verify the use permission of the target key and ensure the secure use thereof when the target key is obtained based on the target key ciphertext.

Step S104: returning index information, and the index information is used to index a storage location of the target key ciphertext and the target key authentication information.

Since the target key is generated and stored inside the processor and will not be returned to a user program, it may also be called an internal key.

The user program may be a program that needs to perform encryption and decryption operations, such as an IKE program, a boxcryptor, a Gpg4win program for signing and encrypting files and emails, etc.

In a case where the program that performs the encryption and decryption operations is the IKE program, the target key may be a Key Encryption Key (KEK), or an ISK, or an IPsec Encryption Key (IEK).

To be noted, although the ISK and the IEK as the target keys (internal keys) have the same generation principle as the ISK and the IEK as the application keys, their functions are different. The ISK and the IEK as the application keys may be used in a second phase of the execution of the IKE program and protected by the target key. The ISK and the IEK as the internal keys are used in processes involving other non-encryption application keys.

The execution of the IKE program includes two phases.

A first phase (also called IKE_SA_INIT or Main Mode): it mainly establishes a secure channel, i.e., an Internet Security Association and Key Management Protocol Security Association (ISAKMP SA), and generate key information for subsequent communication in this process. The key information include a key for identity authentication (SKEYID_a), a key for encryption (SKEYID_e), and a key for generating an IPsec SA key (SKEYID_d).

A second phase (also called a negotiation phase for a quick mode or an IPsec SA): the key information are used to negotiate the IPsec SA, i.e., to determine security parameters and keys for protecting actual data transmission.

In the second phase, the key information generated in the first phase are used to derive the key SKEYID_e for encryption, which encrypts messages during negotiation to ensure that only the two communication parties can understand the negotiation content, thus protecting the negotiation process of the IPsec SA from being eavesdropped or tampered with by any unauthorized third party.

Moreover, the message integrity and the identity authentication are verified by the SKEYID_a derived from the key information generated in the first phase. In the second phase, the quick mode employs the SKEYID_a to ensure the data integrity and authenticate the identity of a data source, so as to ensure that a message has not been tampered with during transmission.

Also, the SKEYID_d (ISK) generated in the first phase is used to derive key information for generating the IPsec SA from the first phase. In the second phase, the quick mode needs to derive keys for generating the IPsec SA from the SKEYID_d, and these keys will be used in the actual IPsec encryption and authentication process.

In this embodiment, the keys SKEYID_e (i.e., the IEK) and SKEYID_d (i.e., the ISK) for encryption may be the aforementioned application keys with higher security levels; and the key that can encrypt and protect these application keys with higher security levels is the target key described in the embodiment of the present disclosure.

It can be seen that in the technical solution according to the embodiment of the present disclosure, the target key is encrypted with the root key of the cryptographic module according to the key management request, because the root key of the cryptographic module is a unique root key generated therein, and the root key is stored in the dedicated memory of the processor. The stored content of the dedicated memory is only visible within the cryptographic module and invisible to any other module (i.e., the stored content managed by the cryptographic module and inaccessible to any other module). Thus, after the target key is encrypted with the root key, the target key ciphertext and the target key authentication information may be further stored in the dedicated memory, thereby ensuring the security of the encryption process of the target key and the security of the target key ciphertext. Meanwhile, the stored content in the dedicated memory is loaded into the secure memory for use when needed, and the target key is at least used to encrypt the application key (which is a critical key for enabling secure data transmission in a virtual private network). Thus, it is possible to effectively ensure the security of the target key ciphertext and the security of the subsequent encryption of the application key using the target key, thereby improving the security of the application key and the security of the execution result of the encryption program.

In order to ensure the security of the use of the root key and the accurate generation of the target key, in an embodiment, the key management request further includes root key authentication information and generation type indication information of the target key.

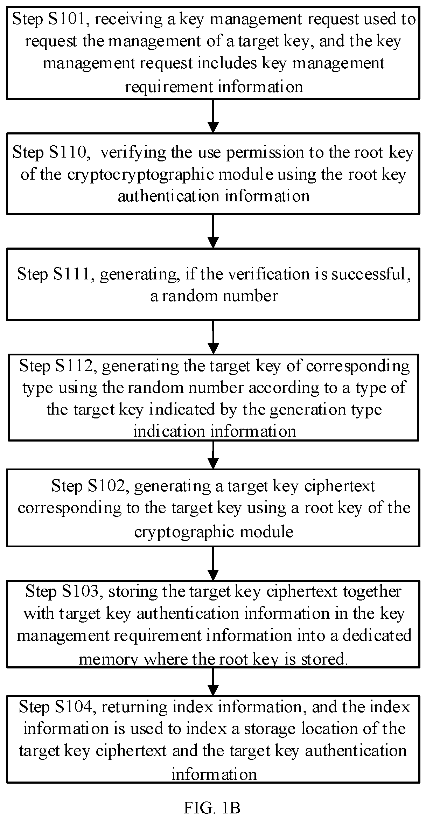

Referring to FIG. 1B, which illustrates a flowchart of a key management method according to another embodiment of the present disclosure. As illustrated in FIG. 1B, before Step S102, the method further includes:
Step S110: verifying the use permission to the root key of the cryptographic module using the root key authentication information.

The root key authentication information (root key authentication code) refers to a mechanism used to verify the identity and the integrity of the root key in a key management system. The root key is at the top of a hierarchical symmetric key structure and is used to generate or protect sub-keys at a smart card level and sub-keys of lower-level institutions. By verifying the root key authentication information, the secure use of the root key is ensured.

Step S111: generating, if the verification is successful, a random number.

After verifying the root key authentication information and confirming that a user (e.g., a user program sending the key management request, such as an IKE program) has the use permission to the root key, the cryptographic module may generate the target key using a random number generated by a True Random Number Generator (TRNG).

The TRNG is a device that generates a random number through a physical process rather than a computer program. The TRNG utilizes inherent randomness in nature, such as physical phenomena like atmospheric noise and radioactive decay, to produce completely unpredictable random numbers. The foundation of the TRNG lies in uncertainty in the physical process and authenticity of a noise source. Through reasonable design and implementation, the TRNG can generate high-quality and unpredictable random numbers with confidentiality.

Step S112: generating the target key of corresponding type using the random number according to a type of the target key indicated by the generation type indication information.

As can be seen from the above content, the keys generated during execution of the IKE program for the virtual private network to achieve secure data transmission include a plurality of types. Therefore, the target key of corresponding type may be generated based on a generation type of the target key (i.e., the generation type indication information) indicated in the key management request.

In an embodiment, the type of the target key includes an encryption type, and the target key of the encryption type is an encryption key; Step S112 may include:
using the random number as an encryption key, and the encryption key is used to encrypt the application key.

The encryption key may be a KEK.

When the generation type indication information indicates that a KEK is needed to be generated, the generated random number may be directly used as the KEK.

In some other embodiments, the type of the target key includes a verification type, and the target key of the verification type is a verification key; Step S112 may include:
using the random number as a private key, and the private key is a verification key, and the verification key is used for enabling secure data transmission in the virtual private network.

The target key for enabling secure data transmission in the private network may be the IKE key or the ISK as the internal key described above.

When the generation type indication information indicates that the IEK key or the ISK is needed to be generated, the random number is used as the private key, and the private key serves as the target key for enabling secure data transmission in the virtual private network.

When the target key is the target key for enabling secure data transmission in the virtual private network, after the private key is generated, the method further includes:
performing cryptographic operation on the private key to generate a public key; and returning the public key according to a public key use request indicated in the key management requirement information.

When the generation of the public key by the cryptographic operation based on the private key, the process may be implemented by an SM2 elliptic curve cryptographic algorithm.

When the SM2 elliptic curve cryptographic algorithm is used to generate the public key, a first step is to generate a private key: selecting a random number d (the random number generated by the TRNG) as a private key, and the private key is a random integer smaller than n; and
a second step is to calculate a public key: calculating a public key Q by multiplying the private key d with a base point G (under a group operation of an elliptic curve).

A public key calculation formula may be expressed as:
public key Q = d·G, where G is the base point and d is the private key.

When the key management requirement information indicates that the user program needs to use the public key, a plaintext of the public key may be directly returned.

An embodiment of the present disclosure further provides a key encryption method, which is applied to a cryptographic module embedded in a processor. The method is used to generate an application key, and realize encryption protection of the application key based on the target key in the key management method according to the aforementioned embodiments.

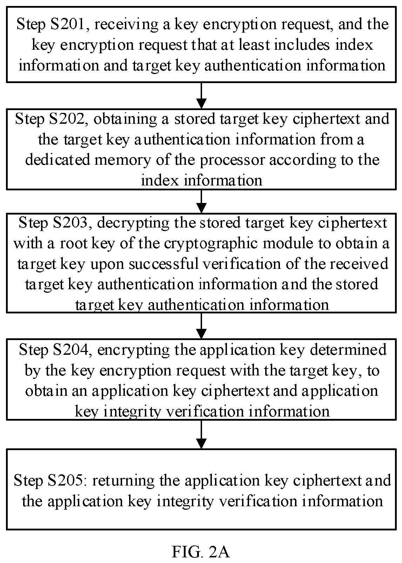

Referring to FIG. 2A, which illustrates a flowchart of a key encryption method according to an embodiment of the present disclosure.

As illustrated in FIG. 2A, the method may include the following steps.

Step S201: receiving a key encryption request, and the key encryption request at least includes index information and target key authentication information.

The index information is obtained according to the key management method according to any of the aforementioned embodiments.

The key encryption request may be sent by a user program to request a cryptographic module to encrypt an application key.

Step S202: obtaining a stored target key ciphertext and the target key authentication information from a dedicated memory of the processor according to the index information.

In the key management method according to the aforementioned embodiments, the target key ciphertext and the target key authentication information have been stored in the dedicated memory, so that the decryption process of the target key ciphertext and the use process of the target key are secure.

Thus, when encrypting the application key, the target key ciphertext and the target key authentication information having stored in the dedicated memory may be taken out based on the index information. The stored content of the dedicated memory is managed by the cryptographic module and loaded into the secure memory of the processor for use. Thus, when the key (application key) being encrypted, the target key ciphertext and the target key authentication information obtained from the dedicated memory are loaded into the secure memory for use, which further ensures the security during use, i.e., the security during encryption of the application key.

The application key is a critical key with a higher security level in the user program, such as the key SKEYID_e or the key priv_i mentioned above. Thus, after the target key ciphertext stored in the dedicated memory in the above key management method is decrypted, the application key is encrypted and protected using the target key, which can improve the security of the application key and meet the security requirement of the application key.

Step S203: decrypting the stored target key ciphertext with a root key of the cryptographic module to obtain a target key upon successful verification of the received target key authentication information and the stored target key authentication information.

The target key is at least used to encrypt an application key.

The verification of the received target key authentication information and the stored target key authentication information can ensure that the use of the target key is secure, i.e., the user program that currently sends the key encryption request to encrypt the application key has the use permission to the target key.

As can be seen based on the aforementioned key management method, the encryption process of the target key is realized using the root key of the cryptographic module, and the root key is also stored in the dedicated memory. Thus, the target key ciphertext may be decrypted with the root key to obtain the target key (the plaintext of the target key).

It can be understood that in the key (application key) encryption process, the application key is mainly encrypted with the target key, so the target key may be an encryption key, such as a KEK. The corresponding target key authentication information may be encryption key authentication information, such as a KEK authentication code.

Step S204: encrypting the application key determined by the key encryption request with the target key, to obtain an application key ciphertext and application key integrity verification information.

The application key integrity verification information may be used to verify the application key in the subsequent use process of the application key. The application key integrity verification information may be a hash value generated during the encryption of the application key by the target key.

Step S205: returning the application key ciphertext and the application key integrity verification information.

Since the application key is a critical key with a higher security level, in the embodiment of the present disclosure, the application key is encrypted with the target key obtained by decrypting the target key ciphertext stored in the private memory, and the application key ciphertext and the application key integrity verification information are returned to the user program to ensure the security of the application key.

It can be seen that in the technical solution according to the embodiment of the present disclosure, when processing the key encryption request, the target key ciphertext and the target key authentication information having been stored are obtained from the dedicated memory according to the index information returned by the cryptographic module when executing the key management request. The stored content in the dedicated memory is only visible within the cryptographic module (i.e., managed by the cryptographic module and inaccessible to any other module), and the root key of the cryptographic module, as a unique root key generated therein, is also stored in the dedicated memory. Therefore, after the target key ciphertext is obtained, the target key may be decrypted with the root key to obtain the target key, the application key may be further encrypted with the target key, and the application key ciphertext and the application key integrity verification information may be returned, so that the security of the application key can be effectively protected, thus improving the security of the application key and the security of the execution result of the encryption and decryption program.

In order to ensure the security of the use of the root key, the key generation request may further include root key authentication information.

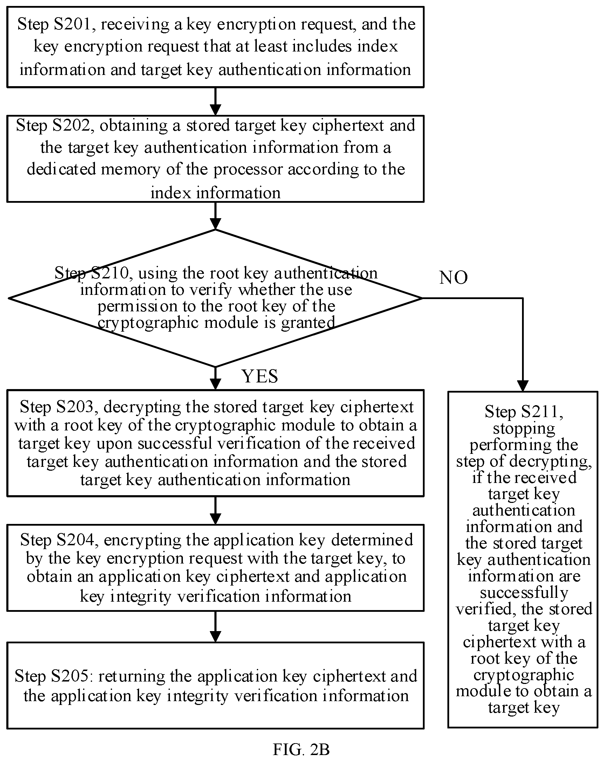

Referring to FIG. 2B, which illustrates a flowchart of a key encryption method according to another embodiment of the present disclosure.

As illustrated in FIG. 2B, before Step S203, the method may further include:

Step S210: using the root key authentication information to verify whether the use permission to the root key of the cryptographic module is granted, if so, performing Step S203, and if not, performing Step S211.

If the verification is successful, it means that the root key can be used, and the target key ciphertext having been verified using the target key authentication information can be decrypted with the root key of the cryptographic module to obtain the target key.

Step S211: stopping performing the step of decrypting the stored target key ciphertext with a root key of the cryptographic module to obtain a target key upon successful verification of the received target key authentication information and the stored target key authentication information.

In order to fully satisfy the encryption protection of the application key with a higher security level, in an embodiment, during encryption of the application key, the step of generating the application key may be determined according to the key encryption request.

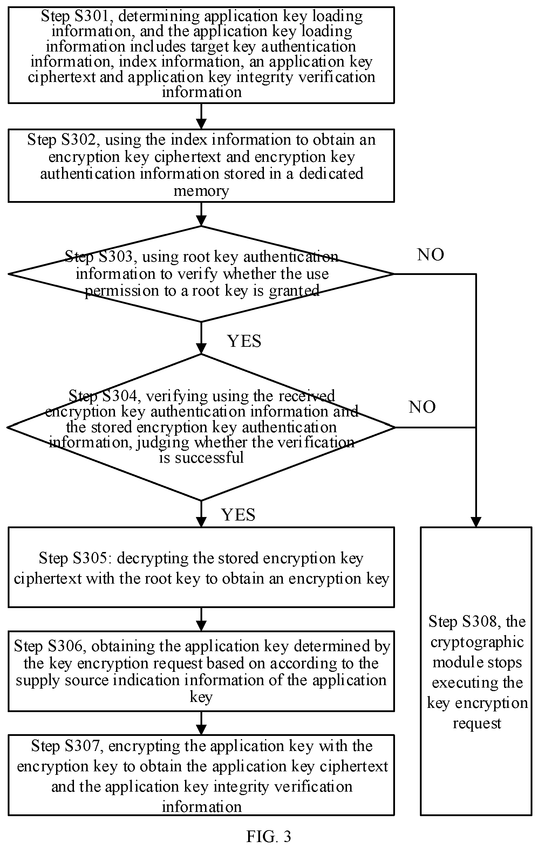

Referring to FIG. 3, which illustrates a flowchart of a key encryption method according to another embodiment of the present disclosure.

As illustrated in FIG. 3, the method includes the following steps.

Step S301: determining application key loading information, and the application key loading information includes target key authentication information, index information, an application key ciphertext and application key integrity verification information.

Step S302: using the index information to obtain an encryption key ciphertext and encryption key authentication information stored in a dedicated memory.

Since an application key is encrypted and protected using a target key, the target key may be an encryption key such as the aforementioned KEK, and the target key authentication information may be the encryption key authentication information.

Step S303: using root key authentication information to verify whether the use permission to a root key is granted, if so, performing step S304, and if not, performing step S308.

Step S304: verifying using the received encryption key authentication information and the stored encryption key authentication information, judging whether the verification is successful, if so, performing step S305, and if not, performing step S308.

Step S305: decrypting the stored encryption key ciphertext with the root key to obtain an encryption key.

Step S306: obtaining the application key determined by the key encryption request according to the supply source indication information of the application key.

The supply source indication information of the application key indicates a supply source of the application key and corresponds to the security level of the application key.

Depending on different types, the application keys have different security levels, i.e., among the various application keys with higher security levels, the security levels may be further divided. The application keys with different security levels also have different supply sources accordingly, so the application key can be accurately determined according to the supply source indication information.

Step S307: encrypting the application key with the encryption key to obtain the application key ciphertext and the application key integrity verification information.

Step S308: the cryptographic module stops executing the key encryption request.

In an embodiment, the supply source indication information of the application key indicates that a supply source of the application key is the cryptographic module, and Step S306 may include:
generating a random number; and
determining the random number as the application key.

When the supply source indication information of the application key indicates that the supply source is the cryptographic module, it means that such application key has a further higher security level among the critical keys with higher security levels. At this time, a random number may be generated using the cryptographic module through a TRNG, and then the random number is used as the application key.

The application key generated using the random number may be a symmetric or asymmetric key such as an ISK/an IEK/a KEK generated using the same method when the target key (ISK/IEK/KEK) is generated in the aforementioned key management method.

To be noted, among the encryption key and verification key generated according to the key management method, the encryption key is used to encrypt the application key, and the verification key is used to process any key other than encrypting the application key. Although the ISK, the KEK and the IEK are generated in both the target key and the application key, the application scenarios are different.

After generating the application key, the cryptographic module performs encryption calculation on the generated application key using the decrypted encryption key (e.g., the KEK) to obtain the application key ciphertext (for the asymmetric key, only the private key is encrypted). Meanwhile, Hash-based Message Authentication Code (HMAC) operation is performed on the application key using the encryption key to obtain a hash value (application key integrity verification information), and the application key ciphertext and the hash value of the application key are returned to the user program to facilitate the subsequent use of the application key.

In some other embodiments, the supply source indication information of the application key indicates that a supply source of the application key is a user program.

The application key can be directly provided by the user program, and the security level of which is lower than the security level of the application key generated by the cryptographic module.

The application key provided by the user may be, for example, the SKEYID_e key, which may be used in the second phase of the execution of the IKE program, i.e., negotiation protection. Therefore, SKEYID_e is important, and is an application key with a higher security level, so that the protection can be enhanced using the encryption key.

Since the user program directly provides the application key, the application key may be directly carried in the key encryption request. At this time, the cryptographic module may perform encryption calculation on the application key provided by the user program directly using the decrypted encryption key to obtain the application key ciphertext (for the asymmetric key, only the private key is encrypted). Meanwhile, HMAC operation is performed on the application key using the encryption key to obtain a hash value (application key integrity verification information), and the application key ciphertext and the hash value of the application key are returned to the user program.

At this point, the encryption protection of the application key is completed, and the user program can obtain the application key ciphertext and the application key integrity verification information returned by the cryptographic module, thus preventing the exposure of the application key itself. When the application key corresponding to the application key ciphertext needs to be used again, the application key ciphertext and the application key integrity verification information may be used. The application key ciphertext is decrypted by the cryptographic module, and the application key may be used indirectly by the cryptographic module, thereby realizing the encryption protection of the application key.

An embodiment of the present disclosure further provides a data encryption method, so as to decrypt and obtain an application key at least using the application key ciphertext in the aforementioned embodiment, and then the decrypted application key is used to implement the data encryption.

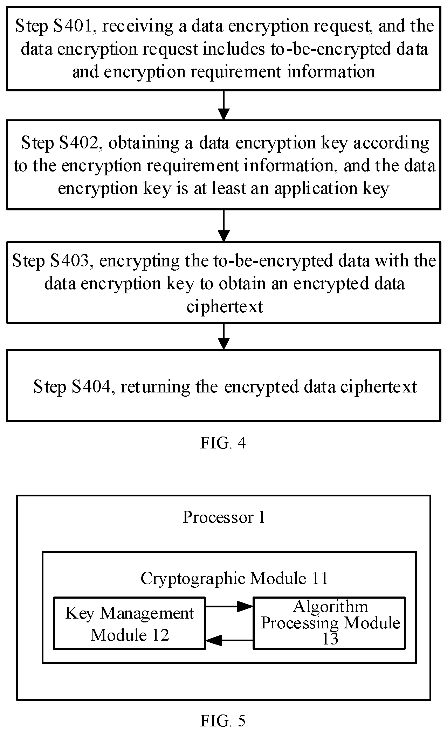

Referring to FIG. 4, which illustrates a flowchart of a data encryption method according to an embodiment of the present disclosure.

As illustrated in FIG. 4, the method includes the following steps.

Step S401: receiving a data encryption request, and the data encryption request includes to-be-encrypted data and encryption requirement information.

Step S402: obtaining a data encryption key according to the encryption requirement information, and the data encryption key is at least an application key.

The application key is obtained by decrypting an application key ciphertext returned by the key encryption method according to any of the aforementioned embodiments.

The application key is encrypted and protected by a target key (mainly encryption key), thereby ensuring the security of the application key, so that during encryption of the to-be-encrypted data with the application key, the security of the data encryption process can be improved.

Step S403: encrypting the to-be-encrypted data with the data encryption key to obtain an encrypted data ciphertext.

Step S404: returning the encrypted data ciphertext.

It can be seen that in the technical solution according to the embodiment of the present disclosure, when processing the data encryption request, at least the application key ciphertext returned by the cryptographic module executing the key encryption request is utilized, and the application key obtained by decrypting the application key ciphertext is taken as the data encryption key to encrypt the to-be-encrypted data. The application key ciphertext is encrypted with the target key, the target key is decrypted based on the target key ciphertext, and the target key ciphertext is obtained by the index information returned by the cryptographic module executing the key management request. The stored content in the dedicated memory is only visible within the cryptographic module (i.e., managed by the cryptographic module and inaccessible to any other module), and the root key of the cryptographic module is the unique root key generated therein, which is also stored in the dedicated memory. Therefore, the decryption of the target key ciphertext is secure, and the decryption of the application key using the decrypted target key is also secure, which effectively protects the security of the application key, thereby improving the security of the encryption of the to-be-encrypted data with the application key.

In order to ensure the use security of the application key, in an embodiment, when the data encryption key is the application key, before the step of obtaining the data encryption key according to the encryption requirement information, the method further includes:
determining application key loading information, and the application key loading information includes target key authentication information, index information, an application key ciphertext and application key integrity verification information;
obtaining a target key ciphertext and the target key authentication information which are stored in the dedicated memory of the processor using the index information;
decrypting the stored target key ciphertext with a root key of the cryptographic module to obtain a target key upon successful verification of at least the received target key authentication information and the stored target key authentication information;
decrypting the application key ciphertext with the target key to obtain an application key; and
loading, if the received application key integrity verification information is successfully verified, the application key into a secure memory of the processor as the data encryption key.

During use, the application key may be loaded into the secure memory by the cryptographic module for use.

The application key ciphertext and the application key integrity verification information are generated by the key encryption method according to the aforementioned embodiment. Therefore, when the application key is used, the user program may provide the application key ciphertext and the application key integrity verification information (e.g., a hash value), and decrypt and use the application key ciphertext through the cryptographic module.

Based on the key encryption method according to the aforementioned embodiment, it can be seen that the application key ciphertext is generated using the target key ciphertext and the target key authentication information stored in the dedicated memory. Therefore, when the application key is used, the encryption requirement information includes the target key authentication information and the index information. The target key ciphertext and the target key authentication code which are stored in the dedicated memory is obtained by the index information, thereby verifying the stored target key authentication information using the received target key authentication information.

If the target key authentication information is verified successfully, it means that the user has the use permission to the target key. At this time, the obtained target key ciphertext may be decrypted with the root key to obtain a target key. Next, the application key ciphertext may be decrypted with the target key to obtain the application key, and after the application key integrity verification information in the encryption requirement information is verified, the application key is loaded into the secure memory of the processor as a data encryption key for the to-be-encrypted data.

In some other embodiments, the application key loading request further includes root key authentication information; and the decrypting of the stored target key ciphertext with a root key of the cryptographic module to obtain a target key upon successful verification of at least when the received target key authentication information and the stored target key authentication information includes:
Decrypting, if the root key authentication information is verified successfully, and the received target key authentication information and the stored target key authentication information are verified successfully, the stored target key ciphertext with a root key of the cryptographic module to obtain a target key.

The root key authentication information is used to confirm the use permission to the root key, thereby ensuring the security of the decryption of the target key ciphertext.

In a case where both the root key authentication information and the target key authentication information have been verified successfully, the security of the decryption of the target key ciphertext can be fully ensured, and at this time, the root key can be used to decrypt the target key ciphertext.

In order to ensure the subsequent reliable use of the application key in the secure memory, in an embodiment, the encryption requirement information further includes application key authentication information; after the step of decrypting, if the root key authentication information is verified successfully, and the received target key authentication information and the stored target key authentication information are verified successfully, the stored target key ciphertext with a root key of the cryptographic module to obtain a target key, and before the step of encrypting the to-be-encrypted data with the data encryption key to obtain an encrypted data ciphertext, the method further includes:
storing the application key together with the application key authentication information in the secure memory of the processor; and
returning application key index information, and the application key index information is used to index a storage location of the application key and the application key authentication information in the secure memory.

The application key authentication information is used to verify the use permission to the application key in the subsequent actual use process of the application key, so as to ensure that the use of the application key is secure and reliable.

The application key index information serves as the index information when using the application key. The application key index information may be a handle.

After returning the application key index information, the user program may proceed with encryption operations using the application key. When the application key is used, the data encryption request further includes the application key index information and the application key authentication information; Step S403 includes:
obtaining the application key and the application key authentication information stored in the secure memory according to the application key index information;
verifying the stored application key authentication information using the application key authentication information; and
encrypting, if the verification is successful, the to-be-encrypted data with the application key to obtain an encrypted data ciphertext.

It can be seen that when the application key is used as the data encryption key, the application key is loaded into the secure memory for storage, and then the application key index information is returned. During actual use of the application key, the user program actually relies on the application key index to have the cryptographic module perform data encryption on its behalf using the application key.

Thus, the security of the use of the application key can be ensured, thereby ensuring the security of data encryption.

In some other embodiments, the data encryption key may further include an external key provided by a user program; and the encryption requirement information further includes encryption algorithm information for encrypting the to-be-encrypted data;

Step S403 includes:
running an encryption algorithm indicated by the encryption algorithm information, and encrypting the to-be-encrypted data with the external key to obtain the encrypted data ciphertext.

In some steps of key negotiation by the user program, there are some scenarios where the encryption is directly carried out using the external key. For example, when an asymmetric public key provided by a counter party in two parties in communication is employed for encryption, the cryptographic module may also support encrypting the to-be-encrypted data directly using the external key, without the need for operations such as pre-loading the application key into the secure memory.

An embodiment of the present disclosure further provides a processor, which implements the key management method, the key encryption method and the data encryption method according to the aforementioned embodiments.

Referring to FIG. 5, which illustrates a structural diagram of a processor according to an embodiment of the present disclosure.

As illustrated in FIG. 5, the processor 1 may include an embedded cryptographic module 11;
the cryptographic module 11 includes:
a key management module 12 configured to receive a key management request used to request the management of a target key, and the key management request includes key management requirement information; the target key is at least used to encrypt an application key, and the application key is a critical key for enabling secure data transmission in a virtual private network;
an algorithm processing module 13 configured to generate a target key ciphertext corresponding to the target key using a root key of the cryptographic module 11;
the key management module 12 is further configured to store the target key ciphertext together with target key authentication information in the key management requirement information into a dedicated memory where the root key is stored; and return index information, and the index information is used to index a storage location of the target key ciphertext and the target key authentication information; and
stored content of the dedicated memory is managed by the cryptographic module, and when being used, the stored content is loaded by the cryptographic module into a secure memory of the processor.

The embedded cryptographic module 11 of the processor 1 is encapsulated in the processor 1 and includes the following two parts:
a cryptographic coprocessor, which is responsible for cryptographic operation, i.e., the "algorithm processing module 13"; and
a security processor and firmware, which are responsible for key management, i.e., the "key management module 12".

The cryptographic module 11 is a dedicated module that provides services for key generation, key management, encryption and decryption acceleration, etc. Since related operations of encryption and decryption are implemented in hardware which is integrated with the processor 1, it can play a vital role in occasions which require higher security levels, high-performance encryption and decryption operations, etc.

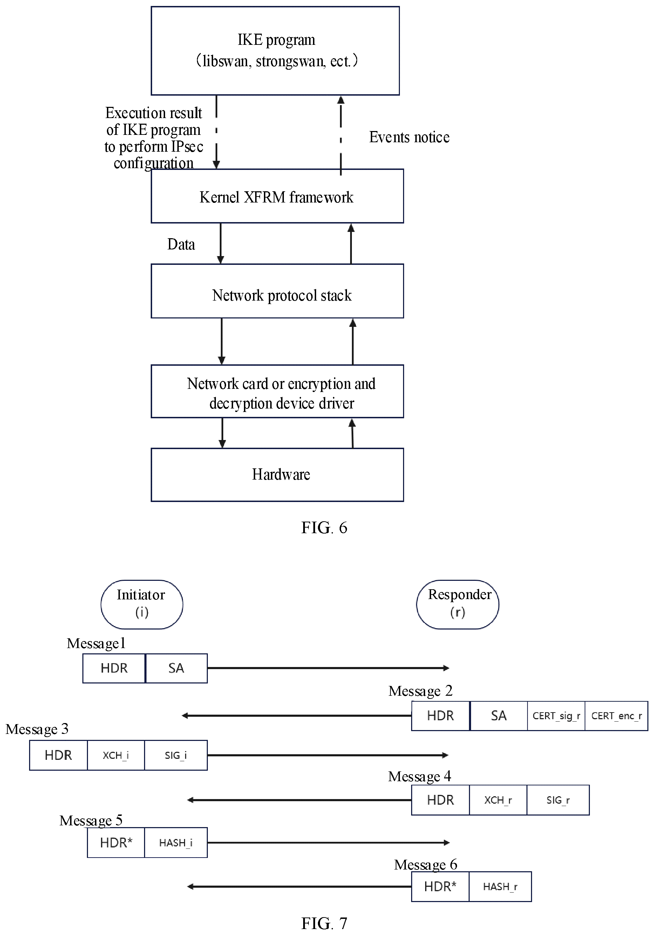

IPSec VPN technology generally adopts a combination solution based on a Linux system, consisting of a user-space IKE program and a kernel-space XFRM. Referring to FIG. 6, which illustrates a schematic diagram of an implementation process of a user-space IKE program based on a Linux system according to an embodiment of the present disclosure.

As illustrated in FIG. 6, the user-space IKE program (e.g., commonly supported by swan-type apps, such as libswan, strongswan, etc.) is responsible for the negotiation between an IKE SA and an IPsec SA, and interacting a negotiation result with an eXtensible Flow Representation and Marking (XFRM) framework (a framework for realizing the IPsec) to realize the configuration of an IPsec policy, and the XFRM is responsible for operations such as encryption and decryption of data packets. In this embodiment, the IKE program performs an IKEv1 or IKEv2 negotiation.

During the execution of the IKE program illustrated in FIG. 6 and the use of the execution result, there are the following problems.
(1) Among the types of the PSec keys, a working key and a session key are used to protect a negotiation process and encrypt service data, which are required to be updated periodically or according to traffic conditions. Moreover, to facilitate use, the working key and the session key may be stored in a volatile memory device and will be destroyed when the device is powered off or the network is disconnected, thereby being relatively safe. A device key is an asymmetric key, which is an initial dependency for the entire device to conduct key negotiation. The device key is generally held for a long time and will not be changed periodically, so it is required to be stored after power-off. The IKE program manages the device key by directly storing a plaintext thereof in a memory by default, or even on a hard disk, which will both cause potential security risks. Therefore, the security level of the execution result (device key, session key, or working key) of the IKE program is not high enough.

In this embodiment, the device key is composed of public-private key pairs used in an asymmetric algorithm, including a signature key pair and an encryption key pair, which are employed for verification and digital signature.

The working key is a key obtained in the first phase of key exchange, and is used to protect a session key exchange process.

The session key is a key obtained in a second phase of key exchange, and is used to encrypt data packets and message MACs.

(2) In the negotiation process of the IKE key, asymmetric algorithms, symmetric algorithms, and verification algorithms are widely employed for the operations such as signature/verification, encryption and decryption, and data verification. The original codes of IKE programs (e.g., libswan, strongswan, etc.) all use software to provide cryptographic operations, and a significant amount of processing power is consumed during the operations of software algorithms, thereby affecting the performance improvement of the index of the number of new connections per second of IPSec VPN products. Thus, the performance is low when software is used to execute cryptographic algorithms in the negotiation process of the IKE key.

Therefore, in the embodiment of the present disclosure, the processor 1 with the embedded (built-in) cryptographic module 11 is used, and the function of executing encryption and decryption programs can be realized by means of the cryptographic module 11. On the basis of the improvement of the performance of executing cryptographic algorithms, the root key of the key management module 12 of the cryptographic module 11 is further used as the device key to encrypt and protect critical keys (application keys) with higher security levels such as the session key and the working key.

Since the root key is stored in the dedicated memory which is a non-volatile memory and the stored content therein is only accessible to the cryptographic module 11 (the key management module 12), which ensures the security of the root key as the device key and the security of the target key encrypted based on the root key, thereby improving the security of the application key in the process of encrypting and protecting the application key using the target key.

The dedicated memory is located in the processor 1, and existed either inside the cryptographic module 11 or outside the cryptographic module 11.

The key management module 12 and the algorithm processing module 13 may execute the key management request of the aforementioned embodiments.

In this embodiment, the key management module 12 is configured to parse and break down the received key management request to generate various control instructions, such as a storage instruction, a generation instruction, an import instruction, an export instruction, a use instruction, and a destruction instruction; then send each of the control instructions and the information (e.g., the key management requirement information) carried in the key management request to the algorithm processing module 13, control the algorithm processing module 13 to execute each of the control instructions, and to return an execution result to the key management module 12. A final result is returned to the user program (e.g., the IKE program) by the key management module 12 to complete the execution of the key management request.

It can be seen that in the technical solution according to the embodiment of the present disclosure, the target key is encrypted with the root key of the cryptographic module according to the key management request, because the root key of the cryptographic module is the unique root key generated inside the cryptographic module and is stored in the dedicated memory of the processor. The content stored in the dedicated memory is visible within the cryptographic module and invisible to any other module (i.e., managed by the cryptographic module and inaccessible to any other module). Therefore, after the target key is encrypted with the root key, the target key ciphertext and the target key authentication information are further stored in the dedicated memory, which ensures the security of the encryption process of the target key and the security of the target key ciphertext. Meanwhile, the stored content of the dedicated memory is loaded into the secure memory for use, and the target key is at least used to encrypt the application key which is the critical key for enabling secure data transmission in the virtual private network. Therefore, it is possible to effectively ensure the security of the target key ciphertext and the security of the subsequent encryption of the application key using the target key, thereby improving the security of the application key and the security of the execution result of the encryption program.

In some other embodiments, the key management module 12 is further configured to receive a key encryption request, and the key encryption request at least includes the index information and the target key authentication information; and obtain the target key ciphertext and the target key authentication information stored in the dedicated memory of the processor according to the index information;
the algorithm processing module 13 is further configured to decrypt the stored target key ciphertext with the root key of the cryptographic module to obtain a target key upon successful verification of the received target key authentication information and the stored target key authentication information, and the target key is at least used to encrypt the application key; and encrypt the application key determined by the key encryption request with the target key, to obtain an application key ciphertext and application key integrity verification information;
the key management module 12 is further configured to return the application key ciphertext and the application key integrity verification information.

The key management module 12 and the algorithm processing module 13 may further execute the key encryption request to generate the application key ciphertext and the application key integrity verification information.

In some other embodiments, the key management module 12 is further configured to receive a data encryption request, and the data encryption request includes to-be-encrypted data and encryption requirement information; and obtain a data encryption key according to the encryption requirement information, and the data encryption key at least includes an application key obtained by decrypting the application key ciphertext;
the algorithm processing module 13 is further configured to encrypt the to-be-encrypted data with the data encryption key to obtain an encrypted data ciphertext; and
the key management module 12 is further configured to return the encrypted data ciphertext.

The key management module 12 and the algorithm processing module 13 may further execute the data encryption request to encrypt the to-be-encrypted data at least with the application key.

Optionally, the key management request, the key encryption request and the data encryption request received by the key management module 12 are generated based on a process of executing a user program by the cryptographic module 11.

In order to facilitate the understanding of the generation of various requests (the key management request, the key encryption request and the data encryption request), the description is given by taking the user program as the IKE program as an example.

Referring to FIG. 7, which illustrates a schematic diagram of a process of executing a user program by a processor according to an embodiment of the present disclosure. FIG. 7 illustrates an example where the user program is an IKE program.

As illustrated in FIG. 7, an initiator is denoted by "i" and a receiver is denoted by "r".
"HDR" represents an Internet Security Association and Key Management Protocol (ISAKMP) message header;
"SA" represents a payload including one or more security association proposals;
"HDR*" indicates that a payload following the ISAKMP message header is encrypted;
"CERT_sig_r" represents a signature certificate payload of a responder;
"CERT_enc_r" represents an encryption certificate payload of the responder;
"HASH_i" represents a hash payload of the initiator;
"HASH_r" represents a hash payload of the responder;
"Ni" represents a nonce payload of the initiator;
"Nr" represents a nonce payload of the responder;
"Idi" represents an identification payload of the initiator;
"IDr" represents an identification payload of the responder;
"prv_i" represents a private key of the initiator;
"prv_r" represents a private key of the responder;
"pub_i" represents a public key of the initiator;
"pub_r" represents a public key of the responder;
"<p>_b" represents a body of a payload <p>, which is the remaining part of a payload without an ISAKMP general header.

During the execution of the IKE program by the cryptographic module of the processor, the interaction between the initiator and the receiver mainly includes:
Message 1: the initiator sends a security association payload encapsulated with a proposed payload to the responder;
Message 2: the responder sends a security association payload along with a signature certificate and an encryption certificate of the responder, and the security association payload indicates that it accepts an SA proposal sent by the initiator;
Messages 3 and 4: the initiator and the responder exchange data, which includes payloads such as a random number "nonce" and an identity (ID). "Nonce" is a parameter essential for generating the encryption key and the verification key, and the ID is an identifier of the initiator or the responder. These data are encrypted and protected using a temporary key Sk (generated by the IKE program; SKi described below represents a temporary key generated by the initiator), Sk is encrypted and protected using a public key in an encryption certificate of the counter party, and both parties digitally sign the data, respectively.

In Messages 3 and 4, "XCH_i" and "XCH_r" are similar in composition, and "SIG_i" and "SIG_r" are similar in composition. For the convenience of explanation, only the initiator (i) is taken as an example in the following description.

The expression of "XCH_i" may be:
XCH_i=asym_encrypt (Ski, pub_r)|sym_encrypt (Ni, Ski)|sym_encrypt(IDi, Ski)|CERT_sig_i|CERT_enc_i;
The expression of "SIG_r" may be:
   SIG_i_b=asym_encrypt (Ski_b|Ni_b|IDi_b|CERT_enc_i_b, priv_i);
   where asym_encrypt (x, y) represents an asymmetric encryption of x with a key y, and sym_encrypt (x, y) represents a symmetric encryption of x with the key y; IDi is an identity of the initiator and priv_i is a private key of the initiator. The asymmetric cryptographic algorithm and the symmetric cryptographic algorithm used in the above process are both determined through the negotiation between Messages 1 and 2. The temporary key Sk and the random number N are randomly generated by the initiator and the responder, respectively. The key management request may be generated after, or synchronously with, Messages 1 and 2.

In the operation of asym_encrypt (Ski, pub_r) in the above process, the used "pub_r" is an encrypted public key of the responder obtained from the encryption certificate of the counter party, so the operation of "asym_encrypt (Ski, pub_r)" only needs to directly use "pub_r" as an external key and call a process of encryption using the external key. Similarly, in the operations of "sym_encrypt (Ni, Ski) and sym_encrypt (IDi, Ski)", Ski is a symmetric encryption key, which is used as an external key and the encryption process is directly called.

However, as the encrypted private key of the initiator, "priv_i", which participates in the operation "asym_encrypt (Ski_b|Ni_b|IDi_b|CERT_enc_i_b, priv_i)" has a higher security level and cannot exist in plaintext. Thus, after the previous steps of "internal key generation" -> "application key generation" -> "application key loading" are performed, it is necessary to complete the subsequent encryption operation using "priv_i" through the "handle". Therefore, the key management request may also be generated in the process of Messages 3 and 4.

After Messages 3 and 4 are finished, the basic key parameters SKEYID are generated respectively, which are used to generate subsequent keys including the key SKEYID_e for protecting Messages 5 and 6 and the negotiation process in the second phase. The key encryption request and the data encryption request may be generated in the process of Messages 5 and 6.

Messages 5 and 6 are symmetrically encrypted with the key "SKEYID_e", so that the initiator and the responder can mutually authenticate the previous exchange process, and the details are omitted. "SKEYID_e" is also employed for negotiation protection in the second phase of the IKE. Therefore, "SKEYID_e" is relatively important and needs to be more protected. It is possible to encrypt, by a case corresponded to provide the plaintext of the application key (the aforementioned case where the supply source is the user program), and the mode of executing "application key generation" -> "application key loading", "SKEYID_e" into a ciphertext and immediately destroy the plaintext of "SKEYID_e". During use, a process of "using the application key" is executed, "SKEYID_e" is imported into the key management module of the cryptographic module, while providing the encryption algorithm information and the to-be-encrypted data. The algorithm processing module is used to execute the encryption algorithm, and SKEYID_e is used to encrypt the to-be-encrypted data, including Message 5, Message 6, and the IKE second phase (the quick mode) negotiation, for all of which the handle corresponding to SKEYID_e may be used to complete the operation.

The exchange of the quick mode relies on the key parameter SKEYID generated by a main mode exchange in the first phase and the keys derived therefrom, so as to negotiate IPSec SA security policies and derive IPSec session keys. The information of the exchange of the quick mode is protected by symmetric encryption, and any payload except the ISAKMP header is needed to be encrypted. In the quick mode, a hash payload follows immediately after the ISAKMP header, and is employed for a message integrity verification and a data source authentication.

In the aforementioned negotiation process of main mode and quick mode, the key is used several times and the corresponding encryption and decryption/hash operations are carried out. By using the steps described in this method, it is possible to fully utilize the capability of the cryptographic module embedded in the processor, improve the security level of the key use and the powerful cryptographic operation performance of the hardware of the cryptographic module.

An embodiment of the present disclosure further provides a cryptographic device to support the realization of the function of the processor.

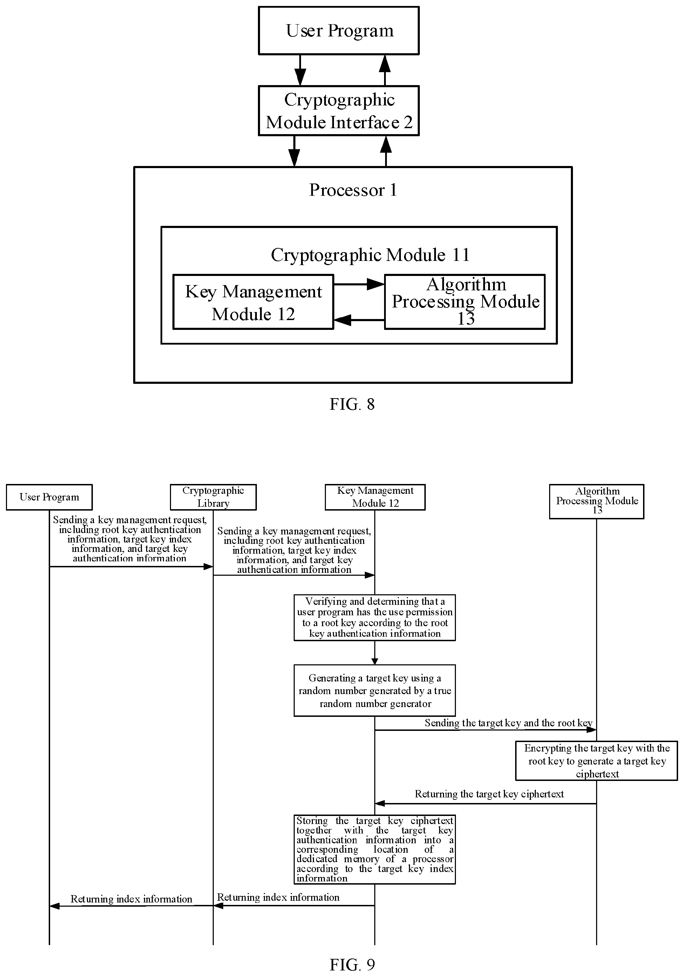

Please refer to FIG. 8, which illustrates a structural diagram of a cryptographic device according to an embodiment of the present disclosure.

As illustrated in FIG. 8, the cryptographic device includes:
a processor 1;
the cryptographic device may further include:
   a cryptographic module interface 2 configured to interact with a user program and a cryptographic module 11 of the processor 1, and provide the cryptographic module 11 with a request sent by the user program, and the request includes at least one selected from a key management request, a key encryption request and a data encryption request.

The cryptographic module interface 2 may be an abstract Application Programming Interface (API), which allows different software components to interact in a unified way. For example, the cryptographic module interface 2 may be a cryptographic library, which provides the user program with the capability to use cryptographic module 11 of the processor 1 through a standard Smart/Secure Device Function (SDF) interface (a fixed function name), including a user-space drive program and the encapsulation of hardware algorithm capabilities.

It can be seen that in the technical solution according to the embodiment of the present disclosure, the target key is encrypted with the root key of the cryptographic module according to the key management request, because the root key of the cryptographic module is a unique root key generated therein, and the root key is stored in the dedicated memory of the processor. The stored content of the dedicated memory is only visible within the cryptographic module and invisible to any other module (i.e., managed by the cryptographic module and inaccessible to any other module). Thus, after the target key is encrypted with the root key, the target key ciphertext and the target key authentication information may be further stored in the dedicated memory, thereby ensuring the security of the encryption process of the target key and the security of the target key ciphertext. Meanwhile, the stored content of the dedicated memory is loaded into the secure memory for use when needed, and the target key is at least used to encrypt the application key (which is a critical key for enabling secure data transmission in a virtual private network). Thus, it is possible to effectively ensure the security of the target key ciphertext and the security of the subsequent encryption of the application key using the target key, thereby improving the security of the application key and the security of the execution result of the encryption program.

Next, the process of executing the IKE program using the cryptographic device to realize each of the above requests will be described.

Please refer to FIG. 9, which illustrates a schematic diagram of an implementation process of executing a key management request by a cryptographic device according to an embodiment of the present disclosure.

In FIG. 9, a user program sends a key management request to a cryptographic module interface (i.e., a cryptographic library illustrated as an example in FIG. 9), and the key management request may include root key authentication information and key management requirement information (target key index information (IDX) and target key authentication information).

The cryptographic library sends a key management request to the key management module 12, and the key management module 12 verifies whether the user program has the use permission to a root key based on the root key authentication information in the key management request.

After the root key authentication information is successfully verified, the key management module 12 generates a target key using a random number generated by a TRNG.

The key management module 12 sends the target key and the root key to an algorithm processing module 13 and, of course, sends a control instruction of the encryption of the target key. Next, the algorithm processing module 13 executes the control instruction of the encryption of the target key, encrypts the target key with the root key to generate a target key ciphertext, and returns the target key ciphertext to the key management module 12.

The key management module 12 merges and stores the target key ciphertext and the target key authentication information in a corresponding location in a dedicated memory of the processor according to target key index information, and returns the index information (target key index information) to the cryptographic library, and the cryptographic library then returns the index information to the user program.

After being generated and encrypted, the target key (e.g., ISK/IEK/KEK) is stored in the dedicated memory together with the root key. The user program can apply to the key management module 12 for using the corresponding target key just by calling the index information (IDX) and providing the target key authentication information, without needing to obtain the target key.

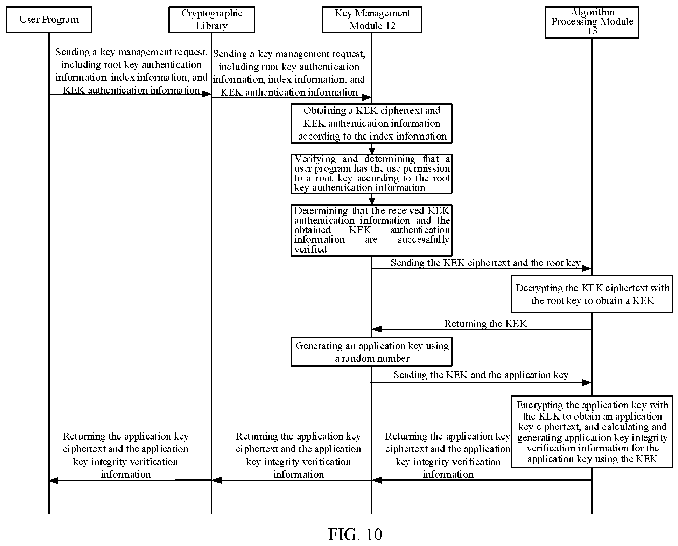

Please refer to FIG. 10, which illustrates a schematic diagram of an implementation process of executing a key encryption request by a cryptographic device according to an embodiment of the present disclosure.

As illustrated in FIG. 10, when a cryptographic device executes a key encryption request, the implementation process may include:
a user program calls a cryptographic module 11 through a cryptographic library to process the key encryption request.

The key encryption request sent by the user program includes root key authentication information, index information (mainly encryption key index information: KEK index information), target key authentication information (mainly encryption key authentication information: KEK authentication information), an application key ciphertext and an application key.

The cryptographic library sends the key encryption request to a key management module 12, and the key management module 12 obtains a target key ciphertext (mainly a KEK ciphertext) and the target key authentication information (mainly the KEK authentication information) stored in the dedicated memory based on the index information. Next, the root key authentication information, the received KEK authentication information and the stored KEK authentication information are verified.

After the received KEK authentication information and the root key authentication information are verified successfully, the stored KEK ciphertext and the root key are sent to an algorithm processing module 13, and of course, there may be a control instruction of the decryption of the KEK. The algorithm processing module 13 executes the control instruction of the decryption of the KEK, decrypts the KEK ciphertext with the root key to obtain a KEK, and returns the KEK (a KEK plaintext) to the key management module 12.

The key management module 12 generates an application key (e.g., KEK/IEK/ISK) through a random number generated by a TRNG, and sends the application key and the KEK to the algorithm processing module 13, and of course, there may be a control instruction of the encryption of the application key.

The algorithm processing module 13 executes the control instruction of the encryption of the application key, encrypts the application key with the KEK, generates an application key ciphertext, while calculating application key integrity verification information (hash value) using the KEK; and returns the application key integrity verification information and the application key ciphertext to the key management module 12.

The key management module 12 returns the application key ciphertext and the application key integrity verification information to the user program through the cryptographic library, thereby completing the encryption protection of the application key.

After the application key is generated and encrypted, the user program obtains the application key ciphertext, and the plaintext of the application key will not be leaked. When the application key is to be used, the user program may load the application key into the key management module 12, and then indirectly use the application key through the key management module 12.

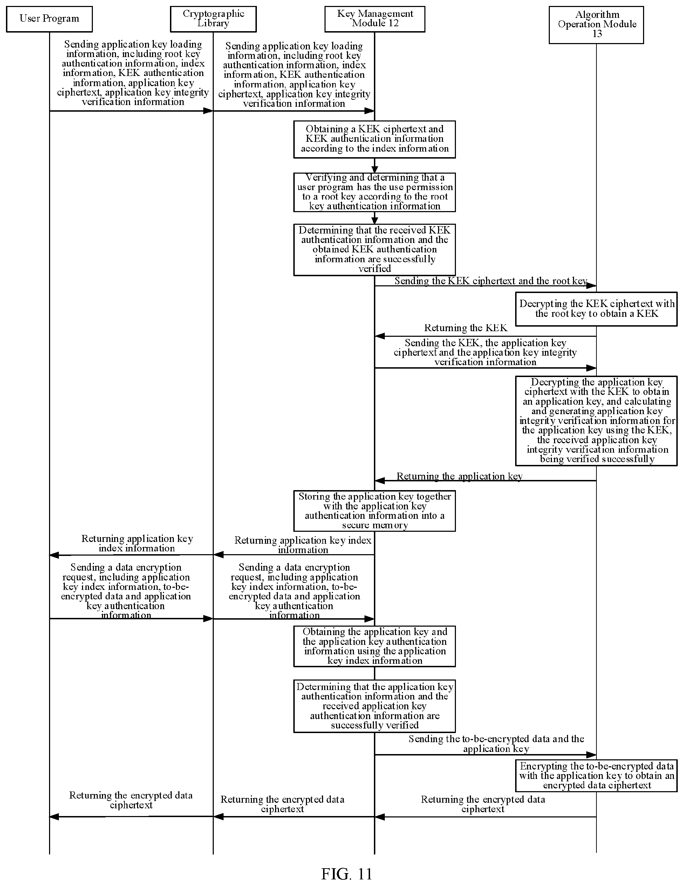

Please refer to FIG. 11, which illustrates a schematic diagram of an implementation process of executing a data encryption request by a cryptographic device according to an embodiment of the present disclosure.

FIG. 11 illustrates a schematic diagram of an implementation process in a case where a data encryption key is an application key.

When the application key is used as the data encryption key, the application key is first loaded and then used. As illustrated in FIG. 11, the user program calls the cryptographic module 11 through the cryptographic library to execute the data encryption request.

Before the data encryption request is executed, the application key is loaded into a secure memory. Thus, application key loading information is determined first, including root key authentication information, target key authentication information, index information, an application key ciphertext and application key integrity verification information.

That is, the user program first sends to the cryptographic library the application key loading information which includes the application key ciphertext and application key integrity verification information returned by the key management module 12 through the cryptographic library. Meanwhile, in order for the decryption of the application key and the secure use thereof, the application key loading information further includes root key authentication information, target key authentication information (mainly KEK authentication information), index information (mainly KEK index information for indexing a KEK ciphertext) and application key authentication information.

The cryptographic library sends the application key loading information to the key management module 12, and the key management module 12 uses the index information to obtain the KEK ciphertext and the KEK authentication information stored in the dedicated memory, verifies the stored KEK authentication information and the received KEK authentication information, and verifies the root key authentication information. After the verification is successful, the key management module 12 sends the root key and the obtained KEK ciphertext to the algorithm processing module 13, while sending a control instruction of the decryption of the KEK.

The algorithm processing module 13 executes the control instruction of the decryption of the KEK, decrypts the KEK ciphertext with the root key to obtain a KEK, and returns the KEK to the key management module 12.

The key management module 12 sends, to the algorithm processing module 13, the KEK and the application key ciphertext, as well as the application key integrity verification information, the control instruction of the decryption of the application key and the control instruction of the generation of the integrity verification information.

The algorithm processing module 13 executes the control instruction of the decryption of the application key, and decrypts the application key ciphertext with the KEK to obtain the application key. Next, the algorithm processing module 13 executes the control instruction of the generation of the integrity verification information to verify the received application key integrity verification information. During verification, the KEK may be used to recalculate the hash value for the decrypted application key, and the recalculated application key integrity verification information is compared with the received application key integrity verification information. When the comparison result indicates consistency, the verification is successful. At this time, the algorithm processing module 13 returns the application key to the key management module 12.

The key management module 12 merges and stores the application key and the application key authentication information in the secure memory of the processor 1, and returns the index information (e.g., a handle) of the application key to the cryptographic library.

Next, when the to-be-encrypted data is needed to be encrypted with the application key, the data encryption request sent by the user program may further include the application key index information, as well as the application key authentication information and the to-be-encrypted data.

The cryptographic module 11 is called through the cryptographic library, and the key management module 12 receives the application key index information in the data encryption request, and obtains the application key and application key authentication information stored in the secure memory. The application key authentication information is used to conduct a comparative verification of the stored application key authentication information. After the verification is successful, the application key, the to-be-encrypted data and a control instruction of data encryption are sent to the algorithm processing module 13.

The algorithm processing module 13 executes the control instruction of data encryption, encrypts the to-be-encrypted data with the application key to generate an encrypted data ciphertext, and returns the encrypted data ciphertext to the key management module 12.

The key management module 12 returns the encrypted data ciphertext to the user program through the cryptographic library.

It can be seen that during use of the application key, the user program does not need to obtain the plaintext of the application key, and the related cryptographic operations are also carried out inside the cryptographic module 11, thereby protecting the security of the application key and the data encryption operation. As long as not being destroyed, the application key only needs to be loaded once, and in the subsequent use of the application key, it is only necessary to provide the correct application key index information (handle) and the correct application key authentication information to the key management module 12. In this way, not only the execution efficiency of the encryption and decryption program can be improved, but also the security of the execution result of the encryption or decryption program can be improved.

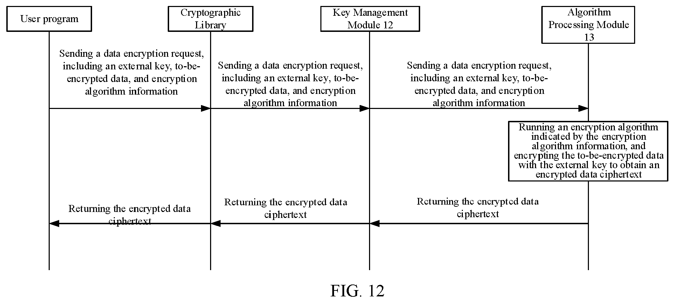

Please refer to FIG. 12, which illustrates a schematic diagram of an implementation process of executing a data encryption request by a cryptographic device according to another embodiment of the present disclosure.

FIG. 12 illustrates a schematic diagram of an implementation process in a case where a data encryption key is an external key.

When the external key is used as the data encryption key, encryption requirement information in the data encryption request sent by a user program may include encryption algorithm information used to encrypt to-be-encrypted data.

The user program sends the data encryption request to a cryptographic library, and the cryptographic library calls a cryptographic module 11 to execute the data encryption request.

The data encryption request may include the to-be-encrypted data, the encryption algorithm information and the external key.

The key management module 12 sends the external key, the encryption algorithm information, the external key and a control instruction of data encryption to an algorithm processing module 13.

The algorithm processing module 13 executes the control instruction of data encryption, runs the encryption algorithm, and encrypts the to-be-encrypted data with the external key to obtain an encrypted data ciphertext.

The algorithm processing module 13 returns the encrypted data ciphertext to the key management module 12, and the key management module 12 returns the encrypted data ciphertext to the user program through the cryptographic library.

A plurality of solutions of the embodiments of the present disclosure has been described above, and various optional modes introduced by the solutions may be combined with each other and cross-referenced without conflict, thereby extending various possible solutions, all of which can be regarded as those revealed and disclosed by the embodiments of the present disclosure.

Although the embodiments of the present disclosure have been revealed above, the present disclosure is not limited thereto. Any person skilled in the art can make various changes and modifications without departing from the spirit and the scope of the present disclosure, and the protection scope of the present disclosure should be based on the scope defined by the claims.

## Claims

1. A key management method, which is applied to a cryptographic module embedded in a processor, wherein the method comprises:
receiving a key management request used to request the management of a target key, wherein the key management request comprises key management requirement information; the target key is at least used to encrypt an application key, and the application key is a critical key for enabling secure data transmission in a virtual private network;
generating a target key ciphertext corresponding to the target key using a root key of the cryptographic module;
storing the target key ciphertext together with target key authentication information in the key management requirement information into a dedicated memory where the root key is stored, wherein stored content of the dedicated memory is managed by the cryptographic module, and when being used, the stored content is loaded by the cryptographic module into a secure memory of the processor; and
returning index information, wherein the index information is used to index a storage location of the target key ciphertext and the target key authentication information.

2. The key management method according to claim 1, wherein the key management request further comprises root key authentication information and generation type indication information of the target key; before the step of generating the target key ciphertext corresponding to the target key using the root key of the cryptographic module, the method further comprises:
verifying the use permission to the root key of the cryptographic module using the root key authentication information;
generating a random number if the verification is successful; and
generating the target key of corresponding type using the random number according to a type of the target key indicated by the generation type indication information.

3. The key management method according to claim 2, wherein the key management requirement information further comprises target key index information; the storing the target key ciphertext together with target key authentication information in the key management requirement information into the dedicated memory where the root key is stored comprises:
storing the target key ciphertext together with the target key authentication information in the key management requirement information into a corresponding location of the dedicated memory indicated by the target key index information, so as to use the target key index information as the returned index information.

4. The key management method according to claim 2, wherein the type of the target key comprises an encryption type, and the target key of the encryption type is an encryption key; the generating the target key of the corresponding type using the random number according to the type of the target key indicated by the generation type indication information comprises:
using the random number as an encryption key, wherein the encryption key is used to encrypt the application key.

5. The key management method according to claim 2, wherein the type of the target key comprises a verification type, and the target key of the verification type is a verification key; the generating the target key of corresponding type using the random number according to a type of the target key indicated by the generation type indication information comprises:
using the random number as a private key, wherein the private key is the verification key, and the verification key is used to enable secure data transmission in the virtual private network.

6. The key management method according to claim 5, further comprising:
performing cryptographic operation on the private key to generate a public key; and
returning the public key according to a public key use request indicated in the key management requirement information.

7. A key encryption method, which is applied to a cryptographic module embedded in a processor, wherein the method comprises:
receiving a key encryption request, wherein the key encryption request at least comprises index information and target key authentication information, and the index information is obtained according to the key management method according to any one of claims 1 to 6;
obtaining a stored target key ciphertext and the target key authentication information from a dedicated memory of the processor according to the index information;
decrypting the stored target key ciphertext with a root key of the cryptographic module to obtain a target key upon successful verification of the received target key authentication information and the stored target key authentication information, wherein the target key is at least used to encrypt an application key;
encrypting the application key determined by the key encryption request with the target key, to obtain an application key ciphertext and application key integrity verification information; and
returning the application key ciphertext and the application key integrity verification information.

8. The key encryption method according to claim 7, wherein the key encryption request further comprises root key authentication information; before the step of decrypting the stored target key ciphertext with the root key of the cryptographic module to obtain the target key if the received target key authentication information and the stored target key authentication information are successfully verified, the method further comprises:
using the root key authentication information to verify the use permission to the root key of the cryptographic module; and
executing, if the verification is successful, the step of decrypting the stored target key ciphertext with the root key of the cryptographic module to obtain the target key if the received target key authentication information and the stored target key authentication information are successfully verified.

9. The key encryption method according to claim 8, wherein the key encryption request further comprises supply source indication information of the application key;
before the step of encrypting the application key determined by the key encryption request with the target key, to obtain the application key ciphertext and application key integrity verification information, the method further comprises:
obtaining the application key determined by the key encryption request based on the supply source indication information of the application key.

10. The key encryption method according to claim 9, wherein the supply source indication information of the application key indicates that a supply source of the application key is the cryptographic module; the obtaining the application key determined by the key encryption request based on the supply source indication information of the application key comprises:
generating a random number; and
determining the random number as the application key.

11. The key encryption method according to claim 9, wherein the supply source indication information of the application key indicates that a supply source of the application key is a user program.

12. The key encryption method according to any one of claims 7 to 10, wherein the target key comprises an encryption key of an encryption type, and the target key authentication information comprises encryption key authentication information.

13. A data encryption method, which is applied to a cryptographic module embedded in a processor, wherein the method comprises:
receiving a data encryption request, wherein the data encryption request comprises to-be-encrypted data and encryption requirement information;
obtaining a data encryption key according to the encryption requirement information, wherein the data encryption key at least comprises an application key obtained by decrypting an application key ciphertext returned by the key encryption method according to any one of claims 7 to 12;
encrypting the to-be-encrypted data with the data encryption key to obtain an encrypted data ciphertext; and
returning the encrypted data ciphertext.

14. The data encryption method according to claim 13, wherein when the data encryption key is the application key, before the step of obtaining the data encryption key according to the encryption requirement information, the method further comprises:
determining application key loading information, wherein the application key loading information comprises target key authentication information, index information, an application key ciphertext and application key integrity verification information;
obtaining a target key ciphertext and the target key authentication information stored in a dedicated memory of the processor using the index information;
decrypting the stored target key ciphertext with a root key of the cryptographic module to obtain a target key upon successful verification of at least the received target key authentication information and the stored target key authentication information;
decrypting the application key ciphertext with the target key to obtain an application key; and
loading, if the received application key integrity verification information is successfully verified, the application key into a secure memory of the processor as the data encryption key.

15. The data encryption method according to claim 14, wherein the application key loading information further comprises root key authentication information; the decrypting the stored target key ciphertext with the root key of the cryptographic module to obtain the target key upon successful verification of at least the received target key authentication information and the stored target key authentication information comprises:
decrypting, if the root key authentication information is verified successfully, and the received target key authentication information and the stored target key authentication information are verified successfully, the stored target key ciphertext with the root key of the cryptographic module to obtain the target key.

16. The data encryption method according to claim 15, wherein the encryption requirement information further comprises application key authentication information; after the step of decrypting, if the root key authentication information is verified successfully, and the received target key authentication information and the stored target key authentication information are verified successfully, the stored target key ciphertext with the root key of the cryptographic module to obtain the target key, and before the step of encrypting the to-be-encrypted data with the data encryption key to obtain the encrypted data ciphertext, the method further comprises:
storing the application key together with the application key authentication information in the secure memory of the processor; and
returning application key index information, wherein the application key index information is used to index a storage location of the application key and the application key authentication information in the secure memory.

17. The data encryption method according to claim 16, wherein the data encryption request further comprises the application key index information and the application key authentication information; the encrypting the to-be-encrypted data with the data encryption key to obtain the encrypted data ciphertext comprises:
obtaining the application key and the application key authentication information which are stored in the secure memory according to the application key index information;
verifying the stored application key authentication information using the application key authentication information; and
encrypting, if the verification is successful, the to-be-encrypted data with the application key to obtain the encrypted data ciphertext.

18. The data encryption method according to claim 13, wherein the data encryption key further comprises an external key provided by a user program; and the encryption requirement information comprises encryption algorithm information for encrypting the to-be-encrypted data; wherein
the encrypting the to-be-encrypted data with the data encryption key to obtain the encrypted data ciphertext comprises:
running an encryption algorithm indicated by the encryption algorithm information, and encrypting the to-be-encrypted data with the external key, to obtain the encrypted data ciphertext.

19. A processor, comprising an embedded cryptographic module;
the cryptographic module comprises:
a key management module configured to receive a key management request used to request the management of a target key, wherein the key management request comprises key management requirement information; the target key is at least used to encrypt an application key, and the application key is a critical key for enabling secure data transmission in a virtual private network;
an algorithm processing module configured to generate a target key ciphertext corresponding to the target key using a root key of the cryptographic module;
the key management module further configured to store the target key ciphertext together with target key authentication information in the key management requirement information into a dedicated memory where the root key is stored; and return index information, wherein the index information is used to index a storage location of the target key ciphertext and the target key authentication information,
wherein stored content of the dedicated memory is managed by the cryptographic module, and when being used, the stored content is loaded by the cryptographic module into a secure memory of the processor.

20. The processor according to claim 19, wherein the key management module is further configured to receive a key encryption request which at least comprises the index information and the target key authentication information; and obtain the target key ciphertext and the target key authentication information stored in the dedicated memory of the processor according to the index information;
the algorithm processing module is further configured to decrypt the stored target key ciphertext with the root key of the cryptographic module to obtain the target key upon successful verification of the received target key authentication information and the stored target key authentication information, wherein the target key is at least used to encrypt the application key; and encrypt the application key determined by the key encryption request with the target key, to obtain an application key ciphertext and application key integrity verification information; and
the key management module is further configured to return the application key ciphertext and the application key integrity verification information.

21. The processor according to claim 20, wherein the key management module is further configured to receive a data encryption request that comprises to-be-encrypted data and encryption requirement information; and obtain a data encryption key according to the encryption requirement information, wherein the data encryption key at least comprises an application key obtained by decrypting the application key ciphertext;
the algorithm processing module is further configured to encrypt the to-be-encrypted data with the data encryption key to obtain an encrypted data ciphertext; and
the key management module is further configured to return the encrypted data ciphertext.

22. The processor according to claim 21, wherein the key management request, the key encryption request and the data encryption request received by the key management module are generated according to a process of executing a user program by the crypto module.

23. A cryptographic device, comprising:
the processor according to any one of claims 19 to 22.

24. The cryptographic device according to claim 23, further comprising:
a cryptographic module interface configured to interact with a user program and a cryptographic module of the processor, and provide the cryptographic module with a request sent by the user program, wherein the request comprises at least one selected from a key management request, a key encryption request and a data encryption request.
